## Europäisches Patentamt
## European Patent Office
## Office européen des brevets

(19)

(11) Numéro de publication: **0 225 209**
**B1**

(12) # FASCICULE DE BREVET EUROPEEN

(45) Date de publication du fascicule du brevet:
**29.11.89**

(51) Int. Cl.⁴: **B65G 49/04, B61B 10/00**

(21) Numéro de dépôt: **86402280.1**

(22) Date de dépôt: **14.10.86**

(54) Dispositif de transport d'objets passant dans des cuves, procédé de convoyage et installation de traitement d'objets.

(30) Priorité: **18.10.85 FR 8515465**

(43) Date de publication de la demande:
**10.06.87 Bulletin 87/24**

(45) Mention de la délivrance du brevet:
**29.11.89 Bulletin 89/48**

(84) Etats contractants désignés:
**AT BE CH DE ES FR GB GR IT LI LU NL SE**

(56) Documents cités:
**DE-A- 3 024 195**
**US-A- 2 887 447**

**USINE NOUVELLE,**
**no. 48, 28 novembre 1985, pages 85,86, Paris, FR; P.**
**LAPERROUSAZ: "Traitement de surface: un système**
**de convoyage économique et fiable"**

(73) Titulaire: **Société Industrielle d'Equipement Technique d'Appareils de Manutention, 42-48 Avenue du Président Kennedy, F-91170 Viry Chatillon(FR)**

(72) Inventeur: **Gros, Jacques, 41 rue André Teissier, F-94120 Fontenay Sous Bois(FR)**

(74) Mandataire: **Thibon-Littaye, Annick, Cabinet A. THIBON-LITTAYE 11 rue de l'Etang, F-78160 Marly-le-Roi(FR)**

EP 0 225 209 B1

# Description

La présente invention concerne un dispositif de transport d'objets portés par des luges de transport, le procédé de convoyage mettant en œuvre ce dispositif et l'installation de traitement d'objets correspondant, comprenant le dispositif de transport.

Le type de dispositif selon l'invention est utilisable notamment pour le transport de pièces qui doivent subir un traitement de surface dans des cuves de traitement. Une application particulière, non limitative, est celle de la peinture des automobiles.

Il existe des dispositifs de transport comportant des chemins de roulement latéralement espacés sur lesquels on fait circuler des balancelles à ossature rigide, ou des berceaux en forme de U, disposés transversalement au sens de déplacement des objets, ces balancelles ou berceaux servant à supporter des luges sur lesquelles sont déposés des objets, luges que l'on solidarise des moyens appropriés avec ces balancelles ou berceaux. Un dispositif de ce type est décrit dans le document DE-A 3 024 195. Dans de tels dispositifs, les deux chemins de roulement sont reliés entre eux par les balancelles rigides ou berceaux et par conséquent, pour le trajet de retour de ces balancelles ou berceaux, on est obligé de prévoir un deuxième dispositif, parallèle au premier, fonctionnant suivant le même principe mais en sens inverse, avec deux chemins de roulement similaires. Ceci conduit à des installations particulièrement complexes et encombrantes, entraînant des frais de construction et d'exploitation importants. La même complexité se retrouve au niveau des systèmes de transfert qui sont prévus aux deux extrémités du circuit, pour faire passer les balancelles de la chaîne de traitement à la chaîne de retour des balancelles vides. L'ossature rigide des balancelles (ou celle de berceaux équivalents) exige là des rayons de courbure importants. De plus, les balancelles rigides (de même que les berceaux) ne permettent pas d'aborder des rampes de pentes importantes à l'entrée et à la sortie des cuves de traitement des objets, alors qu'une augmentation de ces pentes permettrait de réduire la longueur des circuits de traitement, avec des avantages d'autant plus sensibles que le traitement se fait généralement en tunnel.

On connaît également du document US-A 2 887 447 un dispositif de traitement par électrolyse d'un matériau en forme de barre. Ce matériau est chargé sur deux pendules dont une extrémité inférieure en forme de crochet supporte la barre en deux points. Les pendules sont suspendus à des birails et sont associés deux par deux dans le plan de progression de l'installation perpendiculaire au trajet. Un tel dispositif ne peut transporter que des barres chargées directement sur les pendules. De plus on ne peut éviter au moyen d'un tel dispositif que des barres, une fois plongées dans un bain, se mettent à flotter selon la densité du matériau qui les constitue. Ces deux inconvénients limitent considérablement les applications possibles du dispositif.

Un premier but de l'invention est de proposer un dispositif permettant de pallier les inconvénients ci-dessus.

Ce premier but est atteint par le fait que le dispositif de transport d'objets passant dans des cuves de traitement desdits objets comportant deux convoyeurs aériens latéralement espacés entre lesquels l'objet se déplace le long d'un trajet à l'écart des plans verticaux desdits convoyeurs est caractérisé en ce qu'il comporte des pendules librement suspendus à leurs extrémités supérieures par des moyens d'articulations à des moyens d'entraînement propres, respectivement, à chaque convoyeur, lesdits pendules étant associés en couple sur chaque convoyeur dans un même plan de progression, des luges supportant les objets à traiter, lesdits pendules comportant sur leur extrémité libre des moyens de suspension desdites luges, chaque luge coopérant alors de cette manière avec au moins deux desdits pendules respectivement associés à chacun des convoyeurs, et en ce que chaque luge comporte des bras faisant saillie dans le plan de support de l'objet sur chacun de ses côtés, lesdits bras coopérant avec les moyens de suspensions de manière à ce que les pendules supportent les luges par lesdits bras lors du transport et soient pratiquement dans les plans verticaux desdits convoyeurs.

Avantageusement les bras sont télescopiques avec un empattement maximum correspondant à l'écart maximum entre les deux convoyeurs, de manière à ce que les points de suspension des luges sur les pendules restent pratiquement continuellement dans les plans verticaux desdits convoyeurs malgré des variations éventuelles dudit écart.

Un but supplémentaire de l'invention est d'éviter les risques de voir les objets transportés par les luges flotter dans les cuves. Ce deuxième but est atteint par le fait que chaque luge est suspendue aux pendules par un système de verrouillage évitant les risques de flottaison.

Un troisième but de l'invention est d'éviter les risques de flottaison tout en facilitant le transfert à l'entrée et à la sortie du trajet de traitement.

Ce troisième but est atteint par le fait que le système de verrouillage est constitué par un manchon ouvert supporté par chaque pendule à son extrémité inférieure et un méplat disposé à l'extrémité de chaque bras de luge, ce méplat ayant une largeur correspondant à l'ouverture du manchon et supportant un cavalier élastique en forme de U qui vient enserrer l'extérieur du manchon lors de l'accomplissement de la suspension de la luge sur les pendules.

Selon une autre caractéristique, le système de verrouillage se déverrouille automatiquement par déplacement relatif de la luge par rapport au pendule à l'extrémité du trajet de traitement.

Selon un deuxième mode de réalisation, les moyens de verrouillage sont constitués par un manchon ouvert supporté par chaque pendule à son extrémité inférieure et un méplat disposé à l'extrémité de chaque bras télescopique rotatif, chaque méplat de largeur correspondant à l'ouverture du manchon, étant entraîné en rotation, après introduction dans le manchon, par des butées fixes disposées sur le trajet de convoyage, chaque butée agissant sur un ergot solidaire de chaque bras télescopique.

Selon ce deuxième mode de réalisation le système de verrouillage se déverrouille par des moyens prévus soit sur le trajet de transport soit sur des plateaux élévateurs pour ramener le méplat dans un position telle que son axe de symétrie soit aligné avec l'axe de symétrie de l'ouverture du manchon.

L'invention vise aussi à un procédé de convoyage mis en œuvre par le dispositif de transport d'objets. Ce dernier but est atteint par le fait que le procédé de convoyage mis en œuvre par le dispositif de transport d'objets est caractérisé en ce qu'il consiste à:

— présenter à l'entrée du trajet constitué par deux convoyeurs aériens entraînant chacun des pendules suivant un circuit fermé, une luge supportée à une hauteur supérieure à la hauteur des moyens de suspension des pendules;

— provoquer un déplacement relatif entre la luge et les pendules au moment où les pendules entrent en contact avec les bras de la luge pour effectuer la suspension;

— assurer le verrouillage de la luge;

— convoyer les objets par le dispositif de transport;

— assurer le déverrouillage des luges à l'extrémité du dispositif de transport;

— provoquer un déplacement relatif entre les pendules et les luges pour les décrocher des pendules;

— éloigner les luges de l'extrémité du trajet.

Enfin l'invention englobe également l'installation de traitement d'objets dans des cuves comportant le dispositif de transport précité. Dans un tel type d'installation, chaque convoyeur comporte un trajet de traitement pour passage de l'objet dans la cuve et un trajet de retour des pendules dégagés de toute suspension, chaque convoyeur constituant un circuit fermé de circulation des pendules, fermé par le trajet de transport des luges dans la cuve, et le trajet de retour des pendules de chaque côté extérieur du trajet de transport de part et d'autre de chaque convoyeur.

D'autres caractéristiques et avantages de la présente invention apparaîtront plus clairement à la lecture de la description ci-après faite en référence aux dessins annexés dans lesquels:

— la figure 1 représente une vue latérale du dispositif de transport;

— la figure 2 représente une vue schématique en bout du dispositif de transport;

— la figure 3 représente une vue de dessus, schématisée, du trajet parcouru par les objets;

— la figure 4 représente une vue latérale du pendule;

— la figure 5 représente une vue de côté du pendule suivant une direction parallèle au trajet des objets;

— la figure 6 représente une vue en perspective de la luge à bras;

— la figure 7A représente une vue latérale de l'extrémité inférieure des pendules suivant un premier mode de réalisation;

— la figure 7B représente une vue de côté de l'extrémité inférieure du pendule suivant ce premier mode de réalisation;

— la figure 8 représente une vue latérale de l'extrémité inférieure du pendule suivant un deuxième mode de réalisation;

— la figure 8A représente l'étape de verrouillage pour ce deuxième mode de réalisation;

— la figure 8B représente une vue de côté de l'extrémité inférieure du pendule suivant ce deuxième mode de réalisation ;

- la figure 9 représente une vue latérale de l'installation de traitement d'objet.

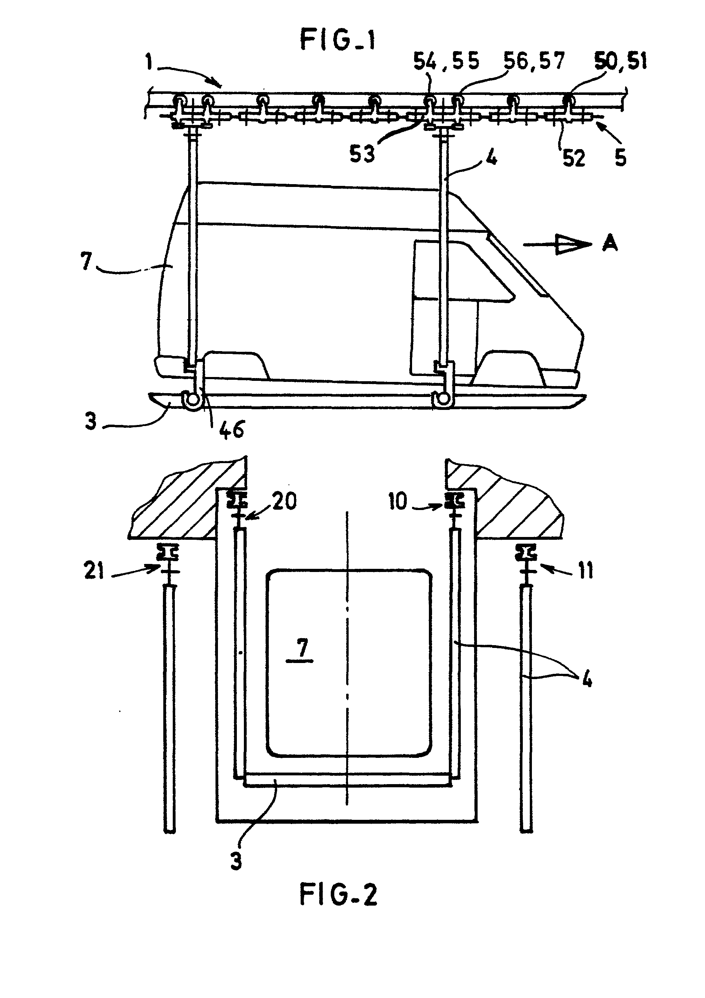

Le dispositif de l'invention va maintenant être décrit à l'aide des figures 1 à 6.

Sur la figure 1, le dispositif de transport d'objets 7, constitués à titre d'exemple, par des carrosseries, comprend une luge 3 qui est suspendue à l'extrémité de pendules 4.

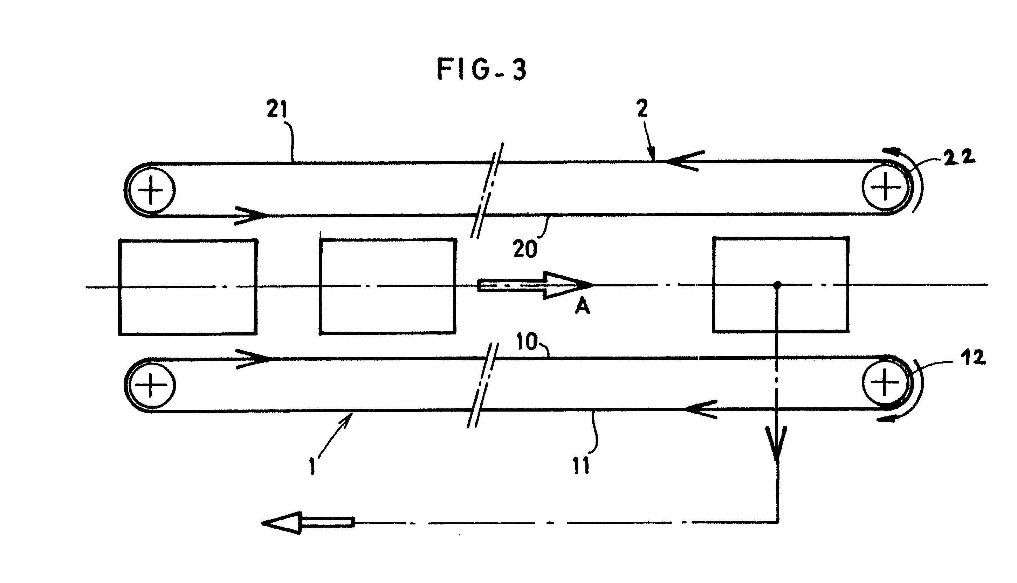

Le dispositif de transport (figures 2 et 3) comporte deux convoyeurs 1 et 2 latéralement espacés, entre lesquels l'objet se déplace le long d'un trajet 10,20 à l'écart des plans verticaux des convoyeurs. Sur ces convoyeurs circule une chaîne de convoyage. L'écart entre les deux convoyeurs permet à l'objet de circuler dans l'installation sans jamais se trouver à l'aplomb de ces convoyeurs et risquer ainsi d'être pollué par des gouttes d'huile ou graisse tombant du convoyeur.

Comme on peut le voir sur les figures 1, 2 et 5, les convoyeurs 1, 2 comportent des chemins de roulement constitués par des monorails 10, 20, de type classique dans le domaine du convoyage, dont la section en forme de I définit deux gorges symétriques. Sur ces monorails circule la chaîne de convoyage, constituée par des maillons 52 reliés entre eux, et comportant également, régulièrement espacés entre des maillons, des chariots 53. Les chariots 53 supportent les pendules de suspension (4) des luges. Les maillons 52 sont reliés entre eux de façon articulée et sont suspendus aux monorails 10,11, 20,21 par des galets 50,51 placés de part et d'autre de la cloison centrale 100 des monorails. Les chariots 53 comportent deux paires de galets 54,55, 56,57, disposés de part et d'autre de la cloison centrale 100 du monorail. Des axes 530, rendus solidaires du chariot 53 par des goupilles 532, comportent des extrémités filetées sur lesquelles viennent se monter des bagues 400 disposées à chaque extrémité d'une pièce d'articulation 40, en forme de fléau, supportant les pendules.

Les pendules, comportant un bras principal 45, sont reliés par leur extrémité supérieure aux chariots de la chaîne de convoyage par des moyens d'articulation 40 à 43 de manière à ce que les pendules gardent une position sensiblement verticale quelles que soient l'inclinaison et la position des convoyeurs.

Un type de ces moyens d'articulation peut être réalisé de manière non limitative par des cardans habituellement utilisés dans les installations de convoyeurs aériens. Ces cardans sont réalisés par la coopération de diverses pièces.

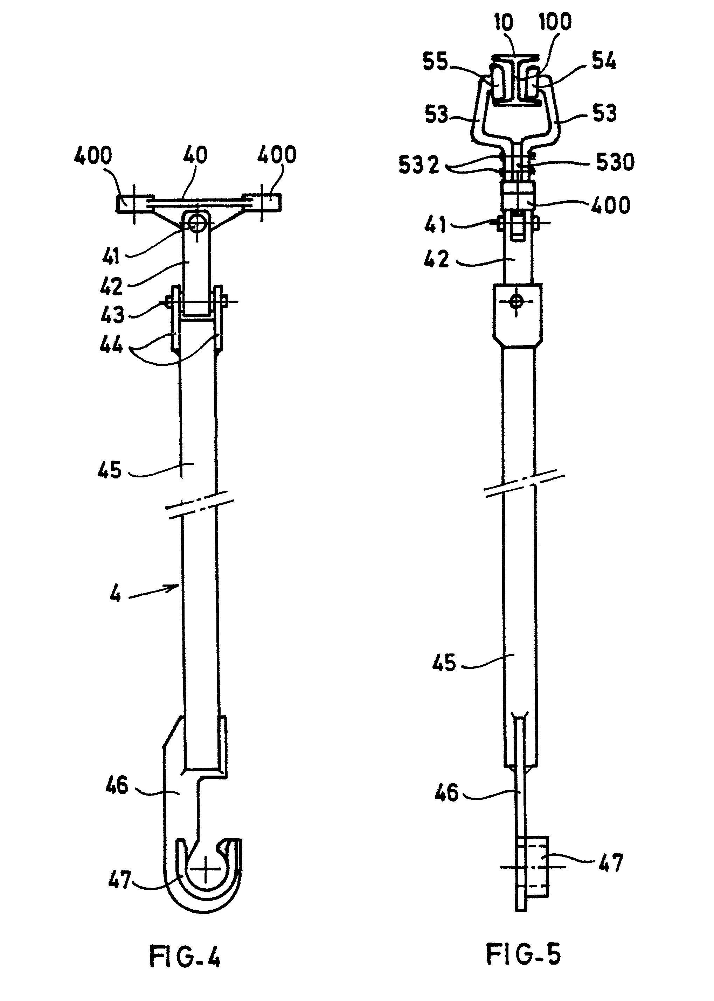

La partie centrale de la pièce d'articulation 40 (figure 4) reçoit un axe d'articulation 41 sur lequel vient se monter une tige intermédiaire 42 comportant un deuxième axe d'articulation 43, lequel est disposé perpendiculairement à l'axe 41. Cet axe 43 est également parallèle au chariot et à la direction de déplacement du convoyeur. Sur cet axe 43 vient se monter par deux flasques 44, le bras principal 45 du pendule.

À leur extrémité inférieure, chaque pendule 4 comporte une pièce de suspension 46, solidarisée au bras principal 45 du pendule par tout moyen connu de l'homme de métier. Cette pièce 46 supporte un manchon 47 disposé suivant l'axe de symétrie du bras 45 du pendule, cet axe de symétrie passant lui-même par l'axe de symétrie de l'axe 41.

Les pièces de suspension disposées à chaque extrémité inférieure des pendules viennent coopérer avec la luge de support de l'objet de manière à pouvoir soutenir cette luge dans le trajet de la cuve de traitement.

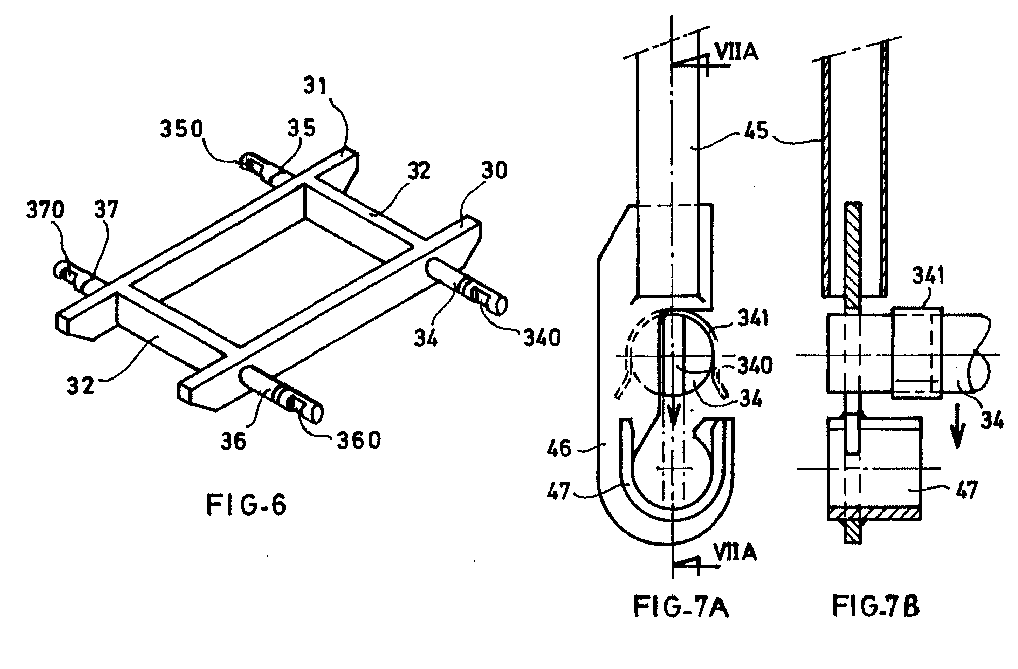

La luge 3, représentée à la figure 6, est constituée de deux patins 30,31, parallèles au trajet de déplacement des objets, reliés entre eux par des traverses 32 de manière à réaliser un plan de support de l'objet. La luge 3 ainsi constituée comporte de chaque côté du plan de support, des bras 34,35,36,37 faisant saillie de part et d'autre des patins, dans le prolongement des traverses. Ces bras, faisant saillie du plan de support deux par deux de chaque côté, viennent coopérer au niveau de leur extrémité libre avec les moyens de suspension du pendule. Chaque bras comporte à ladite extrémité libre, un méplat respectivement 340,350,360,370 qui vient en contact lors du positionnement en suspension de la luge avec chaque manchon 47 des moyens de suspension.

Dans un type de réalisation préférée, les bras sont munis d'un système télescopique comportant une tige munie du méplat précité à une de ses extrémités et coulissant par son autre extrémité dans une tige guide reliée à la luge. Ces deux tiges sont coaxiales et permettent d'augmenter l'écartement des pattes respectivement de chaque côté de la luge, de manière à ce que les points de suspension, réalisés par le contact méplat/manchon, restent toujours à la verticale des convoyeurs.

La distance entre chaque convoyeur peut difficilement rester constante dans toute l'installation et ainsi entraîner des contraintes sur les pendules lorsque ceux-ci supportent la luge. La présence de bras télescopiques permet d'absorber sans inconvénient des écarts relativement importants entre les deux convoyeurs aériens.

Enfin, pour éviter que les méplats ne se dégagent des manchons lorsque l'objet entre dans la cuve de traitement et aient tendance à flotter, on a prévu des moyens de verrouillage des bras sur les crochets de suspension pour supprimer tout risque de décrochement. Les moyens de verrouillage seront explicités en détail ultérieurement.

Le dispositif de transport d'objets, tel que précédemment décrit, est particulièrement adapté pour être utilisé dans une installation de traitement d'objet.

Une telle installation comporte un trajet de traitement 10,20, visible sur les figures 2 et 3, qui permet le déplacement des objets à transporter suivant le sens de la flèche A. A une extrémité de ce trajet la luge est chargée sur les crochets de suspension des pendules. Par le déplacement des chariots 53, entraînés par la chaîne dans les rails 1,2, l'objet est amené dans une cuve de traitement. Il subit l'opération désirée, et est ensuite conduit vers l'extrémité du trajet 10 pour y être déchargé. A cette extrémité du trajet l'installation comporte des moyens de guidage 12,22 de la chaîne qui permettent aux pendules de s'engager dans un trajet de retour 11,21, les pendules étant dégagés de toute suspension. Ce trajet retour se trouve pour chaque convoyeur de chaque côté du trajet de traitement. On réalise donc une boucle fermée de circulation des pendules avec un trajet de suspension, et un trajet de retour vers le point de départ du trajet des objets. Selon l'invention ce circuit fermé a l'avantage d'avoir un encombrement minime puisque le retour s'effectue de chaque côté du trajet de traitement sans avoir à prévoir des espaces importants autour de la cuve.

Le système de verrouillage des bras des luges sur les crochets de suspension des pendules 45 sera maintenant explicité en détail en référence aux figures 7A et 7B.

Sur la figure 7A on peut voir le méplat 340 d'un des bras de la luge peu avant qu'il vienne en contact avec la pièce 46 supportant à son extrémité inférieure le manchon 47. Comme on peut le voir sur la figure 7B, ce méplat supporte un cavalier 341 en forme de U, constitué par une pièce métallique élastique, qui permet, lors du déplacement relatif de la luge 3 par rapport à l'extrémité inférieure des pendules 4, d'assurer le centrage du méplat 340 par rapport à l'ouverture du manchon 47. En effet, comme on peut le voir sur le figure 2, le trajet de retour 11,21, des pendules 4, n'est pas situé en général au même niveau que le trajet aller 10,20 des mêmes pendules, car il n'a pas à suivre les montées et descentes des cuves. A l'extrémité d'entrée du circuit de traitement, les luges 3 peuvent être présentées à une hauteur fixe. Lorsque les pendules transitent du chemin 11 respectivement 21, vers le chemin 10 respectivement 20 par les moyens de guidage 12,22 en subissant un mouvement ascensionnel, les manchons 47 des pendules s'élèvent progressivement pour venir à la hauteur des méplats 340 qui s'emboîtent dans ces manchons. Lors de l'emboîtement, le cavalier 341 sert d'une part à assurer le centrage du méplat par rapport à l'ouverture, d'autre part à assurer par pincement le maintien du méplat 340 dans le manchon 47. Ce maintien permet d'éviter les problèmes de flottaison lors du passage des véhicules et des luges suspendus dans la cuve 9 (figure 9) de traitement.

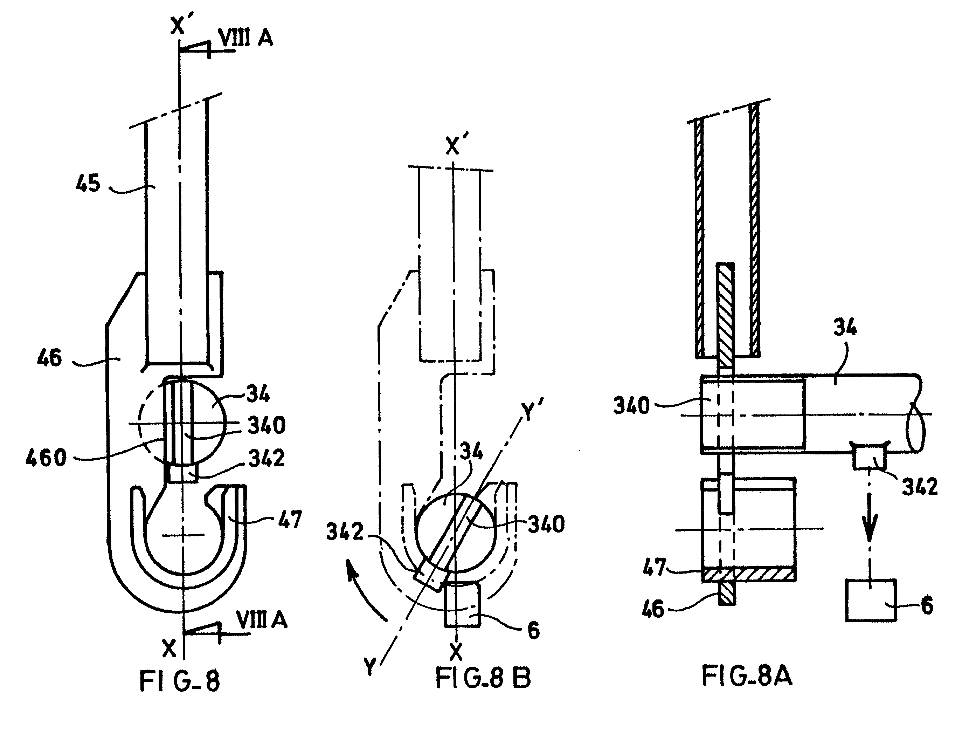

Un deuxième mode de réalisation des moyens de verrouillage est représenté aux figures 8, 8A, 8B. Ce deuxième mode de réalisation comporte également une pièce inférieure 46 dont la face avant 460 est dans le prolongement de l'ouverture du manchon 47. Le manchon 47 est disposé à l'extrémité de la pièce 46 de façon à ce que son axe de symétrie soit aligné avec l'axe de symétrie de la barre principale 45 du pendule et avec l'axe de symétrie de l'axe 41. Lors du déplacement relatif de l'extrémité des pendules par rapport aux bras des luges, les méplats 340, 350, 360, 370 viennent en appui sur les surfaces 460 des pendules et sont guidés par ces surfaces pour être introduits dans l'alésage interne du manchon 47. Lorsque les méplats 340 à 360 des bras des luges reposent sur les manchons 47 des pendules 4, les luges sont suspendues. Comme on peut le voir sur la figure 8, les bras comportent à leur partie inférieure un ergot 342 qui permet une fois les luges suspendues, de provoquer une rotation de bras 34, celui-ci étant télescopique, à l'intérieur du manchon 47, de façon à ce que l'axe de symétrie du méplat 340 ne soit plus aligné avec l'ouverture du manchon 47, comme représenté à la figure 8B. Ceci est aisément réalisé par une butée fixe 6 qui est disposée sur le trajet des ergots 342 après les étapes de suspension des luges, comme illustré sur la figure 9.

Dans ce deuxième mode de réalisation, le déverrouillage des luges sur les pendules peut être assuré à la sortie du trajet de traitement par la mise en place de plateaux élévateurs 8 (visible figure 9) qui comportent des doigts 81 dont la fonction est de faire coïncider à nouveau l'axe de symétrie Y, Y' des méplats 340 à 360 avec les axes de symétrie X, X' des ouvertures des manchons 47. Une fois le déverrouillage assuré de cette façon, ou par tout autre moyen, les luges peuvent être désolidarisées des pendules, soit en les maintenant sur des plateaux fixes et en provoquant un déplacement vers le bras des pendules comme représenté à la figure 2, lorsque les pendules qui se trouvent sur le chemin de roulement 10 vont rejoindre le chemin de roulement 11 de retour, soit en provoquant une élévation du plateau 8 de support des luges.

Dans le premier mode de réalisation du verrouillage, le déverrouillage des luges sur les pendules s'effectue simplement par un déplacement relatif des luges supportées par un plateau et des pendules de suspension des luges.

La figure 9 représente les étapes du procédé de convoyage mis en oeuvre par le dispositif de transport d'objets et l'application de ce procédé au traitement des carrosseries de véhicule. Sur cette figure on peut voir une cuve de traitement 9 et le chemin de convoyage aller 10 du dispositif de transport.

A l'étape définie par un chiffre I, les luges 3 supportant les carrosseries 7 des véhicules sont transportées par une table roulante jusqu'à l'entrée du dispositif de transport d'objets. Lors de l'étape II, les luges sont placées sur des plateaux élévateurs 8. Les bras de ces luges sont amenés à un niveau supérieur des manchons de suspension des pendules 4. Par abaissement du plateau 8 de l'élévateur, la luge 3 se trouve suspendue dans les manchons de chaque pendule 4. A ce stade, les luges sont verrouillées sur les pendules dans le premier mode de réalisation du verrouillage. Dans le cas du deuxième mode de réalisation du verrouillage, l'ensemble pendule/luge transporté entre les étapes II et III de la figure 9 rencontre les butées fixes 6 disposées sur le trajet des bras et qui, lorsque le contact est réalisé, assure un déplacement en rotation de la tige libre du système télescopique des bras.

Les étapes III et V représentent les rampes d'accès et sortie des objets convoyés vers la cuve de traitement 9. On peut constater sur cette figure que le mode de réalisation du système de convoyage permet des pentes importantes, de l'ordre de 45 degrés, du fait de la liaison type cardan des pendules avec les chariots du convoyeur et de la liaison des pendules avec la luge.

L'étape IV correspond à l'étape de traitement des objets dans la cuve 9 contenant le liquide de traitement.

A l'étape VI on vient déposer la luge sur un plateau 8. Dans cette étape, lors de l'utilisation du deuxième mode de réalisation du verrouillage, les doigts 81 du plateau 8 permettent de ramener les méplats 340 à 360 des bras télescopiques rotatifs de façon à ce que les axes de symétrie de ces méplats coïncident avec les axes de symétrie des manchons 47 comme on l'a expliqué précédemment. Le déverrouillage est ainsi assuré lors de cette étape. On provoque ensuite un déplacement relatif des luges par rapport au manchon de suspension des pendules 4. Ce déplacement est provoqué par l'élévation d'un plateau 8 ou, en variante, par l'abaissement du chemin de convoyage des pendules pour amener ceux-ci au niveau du chemin de retour 11, 21. A l'étape VII, les luges sont éloignées de l'extrémité du trajet par une table roulante.

On réalise donc, par la présente invention, une installation de traitement d'un encombrement réduit qui permet d'être facilement adaptée à toute opération de traitement notamment des carosseries.

**Revendications**

1. Dispositif de transport d'objets (7) passant dans des cuves (9) de traitement desdits objets comportant deux convoyeurs aériens (1, 2) latéralement espacés entre lesquels l'objet (7) se déplace le long d'un trajet (A) à l'écart des plans verticaux (10, 20) desdits convoyeurs, caractérisé en ce qu'il comporte des pendules (4) librement suspendus à leurs extrémités supérieures par des moyens d'articulations (41, 42, 43) à des moyens d'entraînement (50 à 57) propres, respectivement, à chaque convoyeur, lesdits pendules (4) étant associés en couple sur chaque convoyeur dans un même plan de progression; des luges (3) supportant les objets (7) à traiter, lesdits pendules comportant sur leur extrémité libre des moyens de suspension (46, 47) desdites luges, chaque luge coopérant alors de cette manière avec au moins deux desdits pendules respectivement associés à chacun des convoyeurs, et en ce que chaque luge (3) comporte des bras (34 à 36) faisant saillie dans le plan de support de l'objet sur chacun de ses côtés, lesdits bras (34, 36) coopérant avec les moyens de suspensions (46, 47) de manière à ce que les pendules supportent les luges par lesdits bras lors du transport et soient pratiquement dans les plans verticaux desdits convoyeurs.

2. Dispositif de transport selon la revendication 1, caractérisé en ce que les bras (34, 36) sont télescopiques avec un empattement maximum correspondant à l'écart maximum entre les deux convoyeurs, de manière à ce que les points de suspension des luges sur les pendules restent pratiquement continuellement dans les plans verticaux desdits convoyeurs malgré des variations éventuelles dudit écart.

3. Dispositif de transport selon les revendications 1 ou 2, caractérisé en ce que les pendules (4) sont articulés aux moyens d'entraînement par des cardans (41, 42, 43), lesdits moyens d'entraînement disposés sur chaque convoyeur étant associés deux par deux sur le même convoyeur, la distance séparant deux moyens d'entraînement correspondant pratiquement à l'entre-axe séparant les bras situés d'un même côté de la luge.

4. Dispositif de transport selon l'une quelconque des revendications 1 à 3, caractérisé en ce que chaque luge (3) est suspendue par des moyens de suspension de quatre pendules (4) comportant un système de verrouillage évitant les risques de flottaison dans la cuve de traitement (9).

5. Dispositif de transport selon la revendication 4, caractérisé en ce que le système de verrouillage est constitué par un manchon (47) ouvert supporté par chaque pendule (4) à son extrémité inférieure (46) et un méplat (340 à 360) disposé à l'extrémité de chaque bras de luge, ce méplat ayant une largeur correspondant à l'ouverture du manchon et supportant un cavalier élastique (341) en forme de U qui vient enserrer l'extérieur du manchon (47) lors de l'accomplissement de la suspension de la luge sur les pendules (4).

6. Dispositif de transport selon la revendication 4, caractérisé en ce que le système de verrouillage est constitué par un manchon ouvert (47) supporté par chaque pendule (4) à son extrémité inférieure (46) et un méplat (340 à 360) disposé à l'extrémité de chaque bras télescopique rotatif (34 à 36), chaque méplat (340 à 360) de largeur correspondant à l'ouverture du manchon (47), étant entraîné en rotation après introduction dans le manchon (47) par des butées fixes (6) disposées sur le trajet de convoyage, chaque butée (6) agissant sur un ergot (342) solidaire de chaque bras (34 à 36) télescopique.

7. Dispositif de transport selon la revendication 5, caractérisé en ce que le système de verrouillage se déverrouille automatiquement à l'extrémité du trajet par déplacement relatif de la luge (3) par rapport aux pendules (4).

8. Dispositif de transport selon la revendication 6, caractérisé en ce que le système de verrouillage se déverrouille par des moyens prévus, soit sur le trajet de transport, soit sur des plateaux élévateurs d'arrivée des luges (8) pour ramener le méplat dans une position telle que son axe de symétrie soit aligné avec l'axe de symétrie de l'ouverture du manchon (47).

9. Procédé de convoyage mis en œuvre par le dispositif de transport d'objet selon l'une quelconque des revendications précédentes, caractérisé en ce qu'il consiste à:
– présenter à l'entrée du trajet constitué par deux convoyeurs aériens (1, 2) entraînant chacun des pendules (4) suivant un circuit fermé, une luge (3) supportée à une hauteur supérieure à la hauteur des moyens de suspension (47) des pendules (4);
– provoquer un déplacement relatif entre la luge (3) et les pendules (4) au moment où les pendules (4) entrent en contact avec les bras télescopiques (34 à 36) de la luge (3) pour effectuer la suspension;

– assurer le verrouillage de la luge;
– convoyer les objets par le dispositif de transport;
– assurer le déverrouillage des luges à l'extrémité du dispositif de transport;
– provoquer un déplacement relatif entre les pendules (4) et les luges pour les décrocher des pendules;
– éloigner les luges de l'extrémité du trajet.

10. Installation de traitement d'objets dans des cuves comportant un dispositif de transport selon l'une quelconque des revendications 1 à 8, caractérisée en ce que chaque convoyeur comporte un trajet de traitement pour passage de l'objet dans la cuve et un trajet de retour des pendules dégagés de toute suspension, chaque convoyeur constituant un circuit fermé de circulation des pendules, formé par le trajet de transport des luges dans la cuve et le trajet de retour des pendules de chaque côté extérieur du trajet de transport de part et d'autre de chaque convoyeur.

11. Installation de traitement selon la revendication 9, caractérisée en ce que l'installation comporte des tables élévatrices (8) venant se placer à l'extrémité des convoyeurs, au niveau de l'entrée dans le trajet de traitement.

**Patentansprüche**

1. Vorrichtung zum Transport von Gegenständen (7), wobei die Vorrichtung die Gegenstände durch Behälter (9), in denen sie bearbeitet werden, hindurchbefördert, bestehend aus zwei voneinander getrennten, beiderseitig aufgehängten Transportvorrichtungen (1, 2), zwischen denen der Gegenstand (7) sich über eine Strecke (A) hinweg mit Abstand von den vertikalen Ebenen (10, 20) dieser Transportvorrichtungen bewegt, dadurch gekennzeichnet, daß pendelförmige Aufhängungen (4) an den oberen Enden durch frei laufende Gelenke (41, 42, 43) mit den eigentlichen Antriebsmitteln (50 bis 57) beziehungsweise mit beiden Transportvorrichtungen verbunden sind, wobei diese Pendelaufhängungen (4) an jeder Transportvorrichtung innerhalb einer gleichen Fortbewegungsebene einander paarweise zugeordnet sind, wobei die zur Bearbeitung bestimmten Gegenstände (7) auf Tragschlitten (3) stehen und die oben genannten Pendelaufhängungen an ihrem freien Ende mit Aufhängungen (46, 47) für die Schlitten versehen sind, wobei jeder Schlitten auf diese Weise wenigstens zwei der jeweils mit den Transportvorrichtungen verbundenen Pendelaufhängungen beansprucht, wofür jeder Schlitten (3) mit Tragarmen (34 bis 36) versehen ist, die auf beiden Seiten der Auflageebene für die beförderten Gegenstände herausragen und wobei die Tragarme (34, 36) mit den Zugmitteln (46, 47) derart verbunden sind, daß die Pendelaufhängungen die Schlitten während der Beförderung durch diese Tragarme festhalten und somit praktisch die vertikalen Ebenen dieser Transportvorrichtungen bilden.

2. Transportvorrichtung gemäß Patentanspruch 1, dadurch gekennzeichnet, daß die Tragarme (34, 36) teleskopisch mit einer maximalen Spannweite ausgeführt sind, die dem maximalen Abstand zwischen den beiden Transportvorrichtungen entspricht, so daß die beiden Aufhängepunkte der Schlitten an den Pendelaufhängungen trotz eventueller Schwankungen dieses Abstands praktisch ständig in den vertikalen Ebenen dieser Transportvorrichtungen verbleiben.

3. Transportvorrichtung gemäß den Patentansprüchen 1 oder 2, dadurch gekennzeichnet, daß die Pendelaufhängungen (4) mittels kardangelagerter Antriebsmittel (41, 42, 43) gelenkig ausgeführt sind, wobei diese an beiden Transportvorrichtungen verteilten Antriebsmittel jeweils paarweise verbunden an einer Transportvorrichtung angebracht sind und der Abstand zwischen zwei Transportvorrichtungen praktisch dem Mittenabstand zwischen den Tragarmen auf einer Seite des Schlittens entspricht.

4. Transportvorrichtung gemäß einem der Patentansprüche 1 bis 3, dadurch gekennzeichnet, daß jeder Schlitten (3) an Tragvorrichtungen aufgehängt ist, die aus vier Pendelaufhängungen (4) bestehen, und daß sie mit einem Verriegelungssystem versehen ist, um eine Instabilität innerhalb des Bearbeitungsbehälters (9) zu verhindern.

5. Transportvorrichtung gemäß Patentanspruch 4, dadurch gekennzeichnet, daß das Verriegelungssystem aus einem offenen Ring (47), mit dem jede Pendelaufhängung (4) am unteren Ende (46) versehen ist, sowie einer Abflachung (340 bis 360) am Ende jedes Schlittentragarms besteht, wobei diese Abflachung eine Breite hat, die der Öffnung des offenen Rings entspricht und von einer dehnbaren U-Klammer (341) umgeben ist, die den äußeren Teil des Rings (47) umschließt, sobald die Aufhängung des Schlittens in die Pendelaufhängung (4) einrastet.

6. Transportvorrichtung gemäß Patentanspruch 4, dadurch gekennzeichnet, daß das Verriegelungssytem aus einem offenen Ring (47), mit dem jede Pendelaufhängung (4) am unteren Ende (46) versehen ist, sowie einer Abflachung (340 bis 360) am Ende jedes drehbaren Teleskoparms (34 bis 36) besteht, wobei jede Abflachung (340 bis 360) der Öffnung des Rings (47) entspricht, der nach Einführung in diesen Ring (47) durch an der Förderstrecke verteilte Anschlagvorrichtungen (6) in Drehung versetzt wird, wobei jeder Anschlag (6) auf einen mit jedem teleskopischen Tragarm (34 bis 36) verbundenen Stift (342) einwirkt.

7. Transportvorrichtung gemäß Patentanspruch 5, dadurch gekennzeichnet, daß das Verriegelungssystem sich automatisch am Ende der Transportstrecke durch die relative Vorwärtsbewegung des Schlittens (3) im Verhältnis zu den Pendelaufhängungen (4) löst.

8. Transportvorrichtung gemäß Patentanspruch 6, dadurch gekennzeichnet, daß das Verriegelungssystem sich durch vorgesehene Mittel entweder während des Transportdurchlaufs oder auf Hebeplatten bei der Ankunft der Schlitten (3) löst, um die Abflachung in eine Stellung zu bringen, die ihre Symmetrieachse auf die Ringöffnung (47) ausrichtet.

9. Transportverfahren, durchgeführt mit der Transportvorrichtung gemäß einem beliebigen der vorstehenden Patentansprüche, dadurch gekennzeichnet, daß es:
- am Beginn der Strecke, die aus zwei hängenden Fördereinrichtungen (1, 2) besteht, die jeweils zwei Pendelaufhängungen (4) innerhalb eines geschlossenen Kreises mitnehmen, einen Schlitten (3) bereitstellt, der oberhalb der Höhe der Antriebsmittel (47) der Pendelaufhängungen (4) aufgehängt ist;
- eine relative Versetzung zwischen dem Schlitten (3) und den Pendelaufhängungen (4) verursacht, sobald die Aufhängungen mit den teleskopischen Tragarmen (34 bis 36) des Schlittens (3) zwecks Aufhängung in Kontakt geraten;
- die Verriegelung des Schlittens bewirkt;
- Gegenstände durch die Transportvorrichtung befördert;
- am Ende der Transportvorrichtung die Entriegelung der Schlitten bewirkt;
- eine relative Versetzung zwischen dem Schlitten (3) und den Pendelaufhängungen (4) verursacht, um diese voneinander zu trennen;
- die Schlitten vom Ende der Förderstrecke entfernt.

10. Anlage zur Bearbeitung von Gegenständen innerhalb von Behältern, die eine Transportvorrichtung gemäß einem der Patentansprüche 1 bis 8 enthält, dadurch gekennzeichnet, daß jede Fördereinrichtung eine Bearbeitungsstrecke für den Durchlauf von Gegenständen durch die Behälter und eine Rückführungsstrecke für die Pendelaufhängungen ohne Traglast enthält, wobei jede Fördereinrichtung einen geschlossenen Kreislauf von Pendelaufhängungen bildet, und zwar einmal die Transportstrecke der Schlitten innerhalb der Behälter und zum anderen die Rückführungsstrecke der Pendelaufhängungen an beiden Seiten jeder Förderstrecke.

11. Bearbeitungsanlage gemäß Patentanspruch 10, dadurch gekennzeichnet, daß diese Anlage Hubtische (8) enthält, die am Ende der Fördereinrichtungen in Höhe des Beginns der Bearbeitungsstrecke angeordnet sind.

## Claims

1. Device for transporting objects (7) which pass into tanks (9) for the treatment of said objects, comprising two laterally spaced aerial conveyors (1, 2) between which the object (7) travels along a path (A) located at a distance from the vertical planes (10, 20) of said conveyors, characterized in that it comprises pendulums (4) freely suspended at the upper ends thereof by articulation means (41, 42, 43) from actuating means (50 to 57) provided respectively for each conveyor, said pendulums (4) being associated in pairs on each conveyor in the same plane of progression; sledges (3) for supporting the objects (7) to be treated, said pendulums being provided on their free ends with suspension means (46, 47) for said sledges, each sledge being accordingly adapted to cooperate in this manner with at least two of said pendulums respectively associated with each conveyor, and that each sledge (3) has arms (34 to 36) which project in the object supporting plane on each of its sides, said arms (34, 36) being adapted to cooperate with the suspension means (46, 47) so as to ensure that the pendulums support the sledges by means of said arms at the time of transportation and are practically in the vertical planes of said conveyors.

2. Transporting device in accordance with claim 1, characterized in that the arms (34, 36) are telescopic with a maximum width corresponding to the maximum spacing between the two conveyors so as to ensure that the points of suspension of the sledges on the pendulums remain practically continuously in the vertical planes of said conveyors in spite of possible variations of said spacing.

3. Transporting device in accordance with claim 1 or claim 2, characterized in that the pendulums (4) are pivotally attached to the actuating means by making use of cardan-joint elements (41, 42, 43), said actuating means disposed on each conveyor being associated in pairs on the same conveyor, the distance between two actuating means being such as to correspond practically to the distances between axes of the arms located on the same side of the sledge.

4. Transporting device in accordance with any one of claims 1 to 3, characterized in that each sledge (3) is suspended by suspension means of four pendulums (4) comprising a locking system which guards against any danger of floating within the treatment tank (9).

5. Transporting device in accordance with claim 4, characterized in that the locking system is constituted by an open sleeve (47) supported by each pendulum (4) at its lower end (46) and a flat face (340 to 360) located at the end of each sledge arm, said flat face being intended to have a width corresponding to the opening of the sleeve and to support a U-shaped resilient clip (341) which clamps the exterior of the sleeve (47) when suspension of the sledge from the pendulums (4) has been completed.

6. Transporting device in accordance with claim 4, characterized in that the locking system is constituted by an open sleeve (47) supported by each pendulum (4) at its lower end (46) and a flat face (340 to 360) located at the end of each rotary telescopic arm (34 to 36), each flat face (340 to 360) having a width corresponding to the opening of the sleeve (47) being driven in rotation after introduction in the sleeve (47) by means of fixed stops (6) placed on the conveying path, each stop (6) being intended to produce action on a lug (342) which is rigidly fixed to each telescopic arm (34 to 36).

7. Transporting device in accordance with claim 5, characterized in that the locking system is automatically released at the end of the path by relative displacement of the sledge (3) with respect to the pendulums (4).

8. Transporting device in accordance with claim 6, characterized in that the locking system is released by means provided either on the transporting path or on lifting platforms for the arrival of the sledges (8) in order to bring the flat face back to a position such that its axis of symmetry is aligned with the axis of symmetry of the opening of the sleeve (47).

9. Method of conveying carried out by the object-transporting device in accordance with any one of the preceding claims, characterized in that it consists in:
- presenting a sledge (3) at the entrance of the path constituted by two aerial conveyors (1, 2), each of which displaces pendulums (4) in a closed circuit, said sledge (3) being supported at a height greater than the height of the suspension means (47) of the pendulums (4);
- producing a relative displacement between the sledge (3) and the pendulums (4, at the moment when the pendulums come into contact with the telescopic arms (34 to 36) of the sledge (3) in order to carry out the suspension;
- locking the sledge;
- conveying the objects by means of the transporting device;
- releasing the sledges at the end of the transporting device;
- producing a relative displacement between the pendulums (4) and the sledges in order to unhook them from the pendulums;
- moving the sledges away from the end of the path.

10. Installation for treatment of objects in tanks comprising a transporting device in accordance with any one of claims 1 to 8, characterized in that each conveyor has a treatment path for passing the object within the tank and a return path for the pendulums which are freed from any suspension, each conveyor being intended to constitute a closed circuit for the movement of travel of the pendulums, formed by the path of transportation of the sledges within the tank and the path of return of the pendulums on each external side of the transportation path on each side of each conveyor.

11. Treatment installation in accordance with claim 9, characterized in that the installation comprises lifting platforms (8) which are placed at the ends of the conveyors at the level of entry into the treatment path.

FIG_1

FIG_2

FIG-3

FIG.4

FIG.5

FIG.7B

FIG-7A

FIG-6

FIG_8

FIG.8 B

FIG_8A

EP 0 225 209 B1